# EUROPÄISCHE PATENTSCHRIFT

(11) **EP 0 485 870 B1**
(45) Veröffentlichungstag und Bekanntmachung des Hinweises auf die Patenterteilung: **24.03.1993**
(21) Anmeldenummer: 91118864.7
(22) Anmeldetag: 06.11.1991
(51) Int. Cl.: A01B 63/112, G01L 5/13

(54) **Kraftsensorsystem zur Erfassung von Zugkräften**
Traction load sensing system
Système de détection des efforts de traction

(30) Priorität: 13.11.1990 US 611628
(43) Veröffentlichungstag der Anmeldung: 20.05.1992
(73) Patentinhaber: DEERE & COMPANY, Moline, Illinois 61265 (US)
(72) Erfinder: Van Gerpen, Harlan Welbert, Cedar Falls, Iowa 50613 (US)
(74) Vertreter: Feldmann, Bernhard

(56) Entgegenhaltungen:
- FR-A- 2 249 319
- GB-A- 2 058 538
- US-A- 4 266 616

## Beschreibung

Die Erfindung betrifft ein Kraftsensorsystem zur Erfassung der auf ein Paar quer zueinander beabstandeter Zugglieder angelegten Kräfte, insbesondere für Gerätebefestigungen von landwirtschaftlichen Schleppern. Die Zugglieder greifen im Bereich der beiden Enden eines querverlaufenden Biegestabes an. Der Biegestab stützt sich an quer zueinander beabstandeten Tragteilen ab. An seinem mittleren Bereich sind Mittel zur Erfassung der Durchbiegung des Biegestabes angeordnet.

Für eine Zugkraftsteuerung eines landwirtschaftlichen Schleppers sind Mittel zur Messung der Zugkraft erforderlich. In der US-A 2,864,295, der US-A 2,974,733 und der US-A 3,022,831 sind Zugkraftmeßeinrichtungen für ein Zugkraftsteuersystem eines Schleppers beschrieben. Bei diesen bekannten Lösungen wird die Zugkraft an gegenüberliegenden Enden eines Biegestabes, der durch quer zueinander beabstandete Tragteile gehalten wird, angelegt. Durch ein Gestänge wird der Betrag der Auslenkung des mittleren Abschnittes des Biegestabes auf einen Servomechanismus des Steuersystems für die Gerätebefestigung des Schleppers übertragen. Die US-A 4,266,616 beschreibt eine ähnliche Zugkraftmeßeinrichtung, bei der die Durchbiegung des Biegestabes durch einen Hallsensor ermittelt wird, der im mittleren Bereich des Biegestabes angeordnet ist. Bei diesen Einrichtungen ist jedoch die Meßempfindlichkeit durch die Steifheit und den daraus resultierenden kleinen Betrag der Durchbiegung des Biegestabes begrenzt.

Die der Erfindung zugrunde liegende Aufgabe wird darin gesehen, ein einfaches, kostengünstiges und empfindliches Kraftsensorsystem der eingangs genannten Art anzugeben, das zur Abgabe von Steuersignalen an ein elektronisches Zugkraftsteuersystem geeignet ist. Die Erfassung der Durchbiegung des Biegestabes soll dabei mit einem käuflichen Sensor möglich sein.

Die Aufgabe wird ausgehend von dem Oberbegriff des Patentanspruches 1 durch dessen kennzeichnende Merkmale gelöst.

Das Zugkrafterfassungssystem besteht aus einem Biegestab, der sich quer zwischen zwei zueinander beabstandeten Tragteilen erstreckt und von diesen gehalten wird. An jedem Ende des Biegestabes ist ein Zugglied gelenkig befestigt. Eine flexible Lasche ist zwischen den beiden Tragteilen angeordnet. Ihre beiden Enden sind an dem Biegestab in der Nähe der Tragteile befestigt. In unbelastetem Zustand ist die Lasche gebogen und weist aus der Richtung des Biegestabes gesehen eine konkave Form auf. Ein Wegsensor, beispielsweise ein geradliniges Potentiometer, ein geradlinig veränderbarer Spannungswandler oder eine andere elektrische Einrichtung, die auf Wegänderungen anspricht, ist zwischen dem Biegestab und einem mittleren Bereich der Lasche angeordnet. Der Wegsensor erfaßt Änderungen des Abstandes zwischen dem Biegestab und dem Bogen der Lasche und erzeugt ein elektrisches Signal, welches kennzeichnend für die an die Zugglieder angelegte Kraft ist. Wird eine Belastung an die Enden des Biegestabes angelegt, so verbiegt sich dieser. Die Lasche wird dabei in die entgegengesetzte Richtung verbogen. Auf diese Weise wirken der Biegestab und die Lasche als mechanischer Verstärker.

Das erfindungsgemäße Kraftsensorsystem kann sowohl Zug- als auch Druckkräfte erfassen. Es ist relativ einfach und kostengünstig herstellbar und weist eine hohe Empfindlichkeit auf. Die Verwendung eines Wegsensors, bei dem es sich um ein käufliches Produkt handeln kann, macht eine einfache Anpassung an ein elektronisches Zugkraftsteuersystem möglich.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1a und 1b: je einen Horizontalschnitt durch einen rechten und einen linken Bereich eines erfindungsgemäßen Kraftsensorsystems, welches einen für das Zugkraftsteuersystem eines Schleppers geeigneten Biegestab aufweist,
- Fig. 2: einen Teilschnitt entlang der Linie 2 - 2 in Fig. 1b,
- Fig. 3: die perspektivische Darstellung einer bevorzugten Ausführung für einen erfindungsgemäße Laschenhalter und
- Fig. 4: die perspektivische Darstellung einer weiteren bevorzugten Ausführung für einen erfindungsgemäßen Laschenhalter.

Der Kraftsensor 10 enthält einen Kraft- oder Biegestab 12, welcher sich quer durch die Tragteile 14 und 16 erstreckt. Die Tragteile 14, 16 werden durch ein Rahmen- oder Gehäuseteil am hinteren Ende eines nicht näher dargestellten Hinterachsgehäuses eines Ackerschleppers gebildet. Die vorderen Enden zweier Zugglieder 18, 20, beispielsweise Unterlenker, sind an den entgegengesetzten Enden des Biegestabes 12, die sich quer durch die Tragteile 14, 16 über diese hinaus erstrecken, angelenkt. Das Tragteil 14 trägt mittels einer Kugellagerung oder einer Kugelbüchse 22, die in dem Tragteil 14 durch einen Halter 23 festgehalten wird, einen vergrößerten Durchmesserabschnitt 21 des Biegestabes 12. Die Kugelbüchse 22 läßt eine Änderung der Winkellage des Biegestabendes zu, wenn der Biegestab 12 durch eine Zugkraft auf die Zugglieder 18, 20 durchgebogen wird.

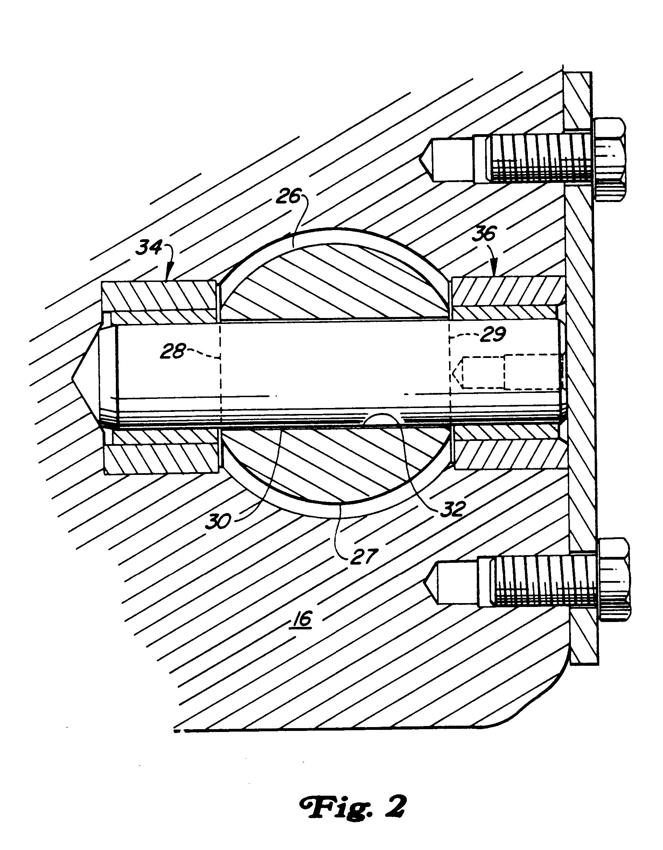

Das Tragteil 16 nimmt lose einen vergrößerten Durchmesserabschnitt 24 des Biegestabes auf und trägt diesen. Der vergrößerte Durchmesserbereich 24 weist zwei abgerundete zylindrische Oberflächen 26 und 27 auf, zwischen denen sich eine obere und eine untere horizontal ausgerichtete ebene Oberfläche 28 und 29 befinden (Fig. 2). Ein Querbolzen 30 erstreckt sich vertikal durch eine Bohrung 32 in dem vergrößerten Durchmesserbereich 24. Die Enden des Querbolzens 30 werden in Büchsen 34, 36 gehalten, welche mit einem Material geringer Reibung, beispielsweise Teflon, ausgefüttert sind, wodurch auf Schmierung verzichtet werden kann. Die an jedem Ende des Bolzens 30 angeordneten Büchsen 34, 36 sind in Bohrungen in dem Tragteil 16 eingepreßt. Beidseits jeder der beiden Büchsen 22 34 sind Ringdichtungen 38 befestigt, um die Büchsen 22, 34 vor Verschmutzung zu schützen.

An den gegenüberliegenden Enden einer Lasche 40 sind Laschenhalter 42 verankert, welche am Biegestab 12 in der Nähe der Tragteile 14, 16 und zwischen diesen befestigt sind. Die Lasche 40 ist wesentlich dünner und damit auch wesentlich flexibler als der Biegestab 12. Wenn keine Kraft anliegt, weist die Lasche 40 eine gebogene und von dem Biegestab 12 aus betrachtet konkave Form auf.

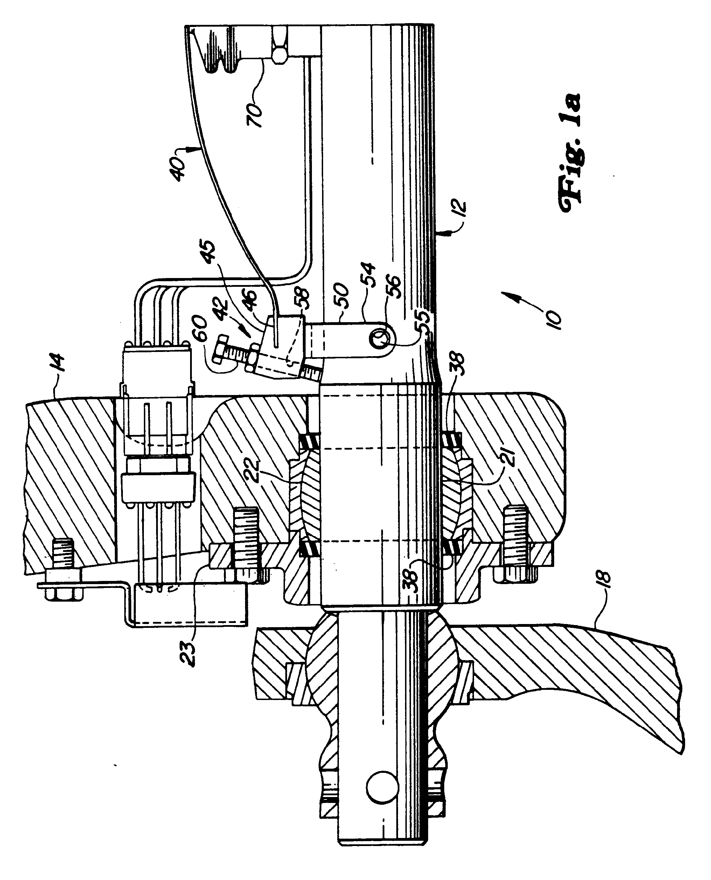

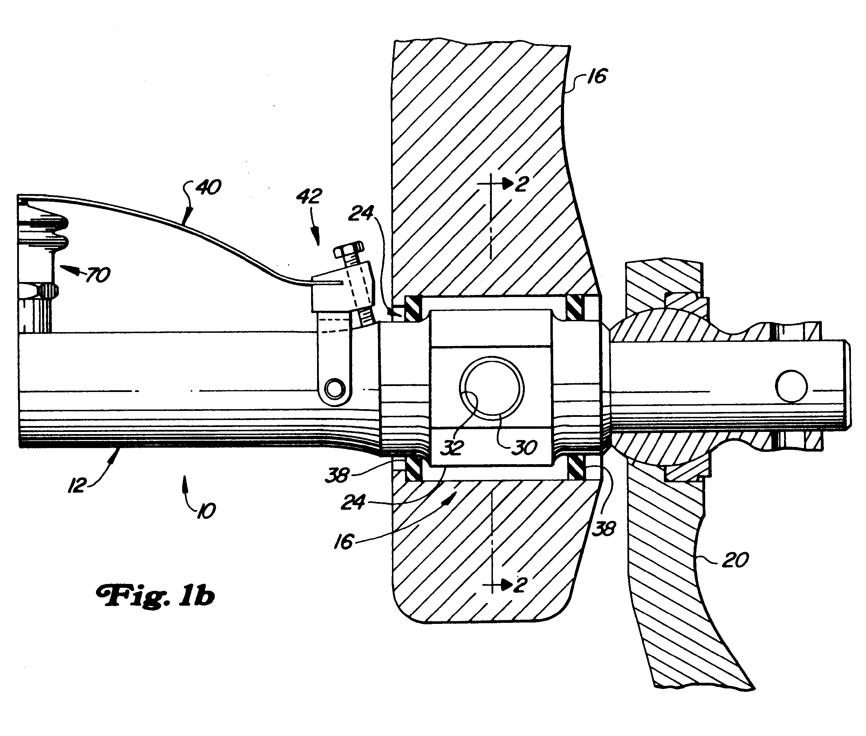

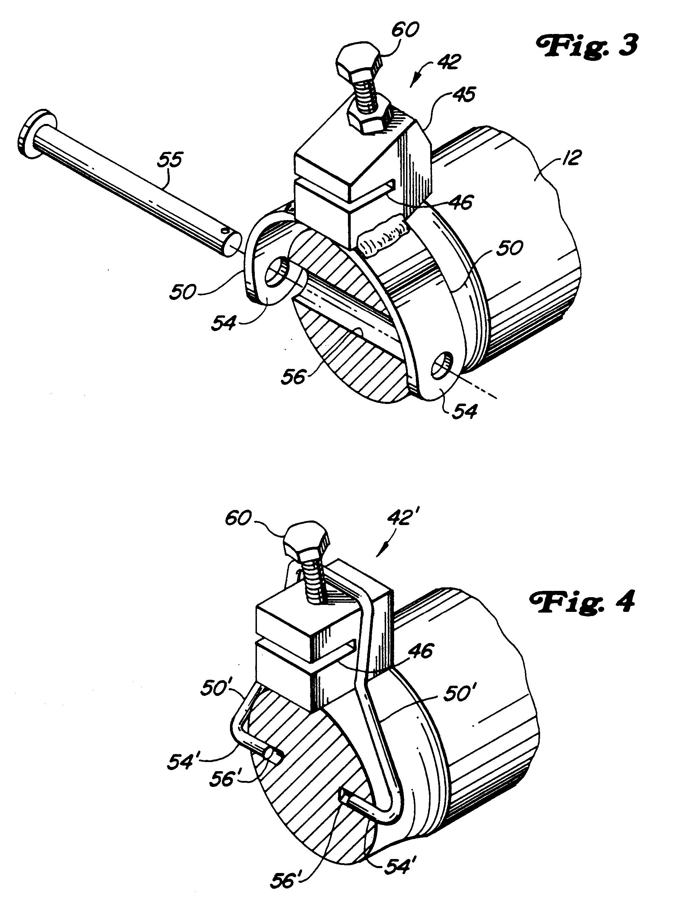

Jeder Laschenhalter 42 hat einen Körper 45 mit einem Schlitz 46, in den ein Ende der Lasche 40 eingesetzt und befestigt ist. Von jedem Körper gehen zwei Schenkel 50 aus und umfassen den Biegestab 12. Wie es am besten aus den Figuren 1 und 3 hervorgeht, können die Schenkel 50 gelochte Endbereiche 54 aufweisen, die mit dem Biegestab 12 über Bolzen oder Schrauben 55, welche sich durch ein Befestigungsloch 56 in dem Biegestab 12 erstrecken, verbunden sind. Ein alternativer Laschenhalter 42′, wie er aus Fig. 4 hervorgeht, hat Schenkel 50′ mit abgebogenen Endbereichen oder Tragfüßen 54′, welche von flachen Befestigungsausnehmungen 56′ oder Sacklöchern in dem Biegestab 12 aufgenommen werden. Bei beiden Laschenhalterkonstruktionen erstreckt sich eine Gewindebohrung 58 durch jeden Körper 45, die um einen kleinen Winkel bezüglich einer Ebene, welche durch die Mittellinie der Schenkel 50 verläuft, geneigt ist. In jede Gewindebohrung 58 ist eine Einstell- oder Kopfschraube 60 eingeschraubt und stützt sich mit ihrem freien Ende so an dem Biegestab 12 ab, daß die Lage des Körpers 45 und damit die Enden der Lasche 40 durch Verdrehen der Schrauben 60 einstellbar sind.

Ein kostengünstiger käuflicher Wegsensor 70 ist zwischen dem Biegestab 12 und einem mittleren Abschnitt der Lasche 40 angeordnet. Bei dem Wegsensor 70 kann es sich um einen geradlinigen Weggeber, beispielsweise ein geradliniges Potentiometer, einen geradlinig veränderbaren Spannungswandler oder eine andere elektrische Einrichtung handeln, die auf eine Wegänderung anspricht. Die durch die Zugglieder 18, 20 auf die Enden des Biegestabes 12 übertragene Zugkraft verbiegt den Biegestab 12. Hierbei wirkt die flexible Lasche 40 als mechanischer Verstärker. Fertigungstoleranzen können dazu führen, daß der Wegsensor 70 nicht die richtige Ausgangsspannung aufweist, wenn keine Zugkraft anliegt. Daher werden, nachdem der Wegsensor 70 befestigt ist, die Kopfschrauben 60 so lange verstellt, bis der Wegsensor 70 ein elektrisches Nullausgangssignal abgibt.

Wird eine Zugkraft an die Zugglieder 18, 20 angelegt, durch die die Enden des Biegstabes 12 gemäß Fig. 1 nach unten gezogen werden, so biegt sich der mittlere Abschnitt des Biegestabes 12 nach oben. Die Laschenhalter 42 und die Enden der Lasche 40 bewegen sich voneinander weg, so daß die Mitte der Lasche 40 sich näher zum mittleren Abschnitt des Biegestabes 12 bewegt. Hierdurch wird die Ausgangsspannung des Wegsensors 70 verändert. Dieses Spannungssignal kann an einen Eingang eines elektronischen Steuersystems für eine Anhängevorrichtung des Fahrzeuges oder für ein an das Fahrzeug angehängtes Anhängegerät angelegt werden.

Durch seine senkrechte Ausrichtung erlaubt der Querbolzen 30 eine zentrale Durchbiegung des Biegestabes 12 in einer horizontalen Ebene. Der Querbolzen 30 verhindert eine Drehung des Biegestabes 12 um seine Achse, wenn die Zugglieder 18, 20 angehoben oder abgesenkt werden. Er verhindert ferner eine axiale Bewegung des Biegestabes 12 und daß ein Ende des Biegestabes 12 aus einem Tragteil 14, 16 heraustritt. Der Querbolzen 30 nimmt ferner die seitlichen Kräfte auf, die bei einer seitlichen Belastung der Zugglieder 18, 20 auf den Biegestab 12 übertragen werden.

Der Querbolzen bildet eine Spielpassung mit der Bohrung 32. Wenn sich der Biegestab 12 verbiegt, wälzt sich der Querbolzen 30 innerhalb der Büchses 34, 36 ab. Dieses Abrollen ist möglich, da die Reibung zwischen der Lastfläche der Büchsen 34, 36 und den Enden der Querbolzen 30 viel kleiner ist als die Reibung des Stahl-auf-Stahl-Kontakts zwischen dem Querbolzen 30 und der Innenfläche der Bohrung 32. Das Spiel, daß das Abrollen des Querbolzens 30 zuläßt, ermöglicht es dem Querbolzen 30 auch, sich entsprechend einer vertikalen Belastung auszulenken, ohne daß der Querbolzen 30 aufsitzt, solange keine zu große Abweichung auftritt.

## Patentansprüche

1. Kraftsensorsystem zur Erfassung der auf ein Paar quer zueinander beabstandeter Zugglieder (18, 20) angelegten Kräfte, insbesondere für Gerätebefestigungen von landwirtschaftlichen Schleppern, wobei die Zugglieder (18, 20) im Bereich der beiden Enden eines querverlaufenden Biegestabes (12) angreifen, der sich an quer zueinander beabstandeten Tragteilen (14, 16) abstützt und an dessen mittleren Bereich Mittel zur Erfassung der Durchbiegung des Biegestabes (12) angeordnet sind, dadurch gekennzeichnet, daß die Enden einer sich quer erstreckenden Lasche (40) an dem Biegestab (12) befestigt sind, daß die Lasche (40) wesentlich flexibler ist als der Biegestab (12) und sich bei einer Biegung des Biegestabes (12) mit diesem verformt und sich dabei mit ihrem mittleren Bereich dem Biegestab (12) annähert oder sich von diesem entfernt, und daß ein Wegsensor (70) zwischen dem Biegestab (12) und einem mittleren Bereich der Lasche (40) zur Messung von Änderungen des Abstandes zwischen Biegestab (12) und Lasche (40) angeordnet ist.

2. Kraftsensorsystem nach Anspruch 1, dadurch gekennzeichnet, daß in einem Tragteil (14) eine Kugelbüchse (22) befestigt ist, die ein erstes Teilstück des Biegestabes (12) aufnimmt und es dem Biegestab (12) ermöglicht, sich in der ersten Kugelbüchse (22) entsprechend einer Durchbiegung zu neigen.

3. Kraftsensorsystem nach Anspruch 1 oder 2, dadurch gekennzeichnet, daß ein Querbolzen (30) ein zweites Teilstück des Biegestabes (12) mit dem anderen Tragteil (16) verbindet und verhindert, daß sich der Biegestab (12) aus den Tragteilen (14, 16) ziehen läßt.

4. Kraftsensorsystem nach Anspruch 3, dadurch gekennzeichnet, daß die Achse des Querbolzens (30) sich im wesentlichen senkrecht zu der Biegeebene des Biegestabes (12) erstreckt.

5. Kraftsensorsystem nach einem der Ansprüche 1 bis 4, dadurch gekennzeichnet, daß die Lasche (40) aus der Richtung des Biegestabes (12) gesehen konkav gebogen ist und mit ihren Enden näher am Biegestab (12) liegt als mit ihrem mittleren Bereich.

6. Kraftsensorsystem nach einem der Ansprüche 1 bis 5, dadurch gekennzeichnet, daß wenigstens ein Ende der Lasche (40) an einem am Biegestab (12) festgelegten Laschenhalter (42) befestigt ist.

7. Kraftsensorsystem nach Anspruch 6, dadurch gekennzeichnet, daß der Laschenhalter (42) einen Körper (45) mit einem Schlitz (46) zur Aufnahme eines Endes der Lasche (40) aufweist.

8. Kraftsensorsystem nach Anspruch 6 oder 7, dadurch gekennzeichnet, daß der Laschenhalter (42) zwei Schenkel (50) aufweist, die sich beidseits des Biegestabes (12) erstrecken und derart mit dem Biegestab (12) verbunden sind, daß ein Verschwenken des Laschenhalters (42) um eine Achse senkrecht zur Biegestabachse möglich ist.

9. Kraftsensorsystem nach einem der Ansprüche 1 bis 8, dadurch gekennzeichnet, daß Einstellmittel (60) zur Einstellung der Lage eines Endes der Lasche (40) in Bezug auf den Biegestab (12) vorgesehen sind.

10. Kraftsensorsystem nach Anspruch 9, dadurch gekennzeichnet, daß als Einstellmittel eine Schraube (60) dient, die in einen beweglich am Biegestab (12) befestigten Laschenhalter (42) einschraubbar ist und sich mit einem Ende an dem Biegestab (12) abstützt.

## Claims

1. A force sensor system for detecting forces applied to a pair of transversely spaced tension members (18, 20), especially for implement attachments of agricultural tractors, wherein the tension members (18, 20) engage a transversely extending flexural bar (12) in the region of its two ends, which bar is supported in transversely spaced support parts (14, 16) and at the middle of which are arranged means for detecting the bowing of the flexural bar (12), characterized in that the ends of a transversely extending tongue (40) are fixed to the flexural bar (12), in that the tongue (40) is substantially more flexible than the flexural bar (12) and is deformed with the flexural bar (12) on bowing thereof, so that its middle region approaches or moves away from the flexural bar (12), and in that a displacement sensor (70) is arranged between the flexural bar (12) and a middle region of the tongue (40) to measure changes in the spacing between the flexural bar (12) and the tongue (40).

2. A force sensor system according to claim 1, characterized in that a spherical bush (22) is fixed in one support part (14) and receives a first portion of the flexural bar (12) and makes it possible for the flexural bar (12) to tilt in the first spherical bush (22) in correspondence with its bowing.

3. A force sensor system according to claim 1 or 2, characterized in that a transverse pin (30) connects a second portion of the flexural bar (12) to the other support part (16) and prevents the flexural bar (12) being free to be withdrawn from the support parts (14, 16).

4. A force sensor system according to claim 3, characterized in that the axis of the transverse pin (30) extends substantially perpendicular to the bending plane of the flexural bar (12).

5. A force sensor system according to any one of claims 1 to 4, characterized in that the tongue (40) is concavely bowed out of the alignment of the flexural bar (12) and lies closer to the flexural bar (12) at its ends than in its middle region.

6. A force sensor system according to any one of claims 1 to 5, characterized in that at least one end of the tongue (40) is fixed to a tongue retainer (42) attached to the flexural bar (12).

7. A force sensor system according to claim 6, characterized in that the tongue retainer comprises a body (45) with a slot (46) for receiving an end of the tongue (40).

8. A force sensor system according to claim 6 or 7, characterized in that the tongue retainer (42) has two arms (50) which extend on the two sides of the flexural bar (12) and are so connected to the flexural bar (12) that the tongue retainer (42) can pivot about an axis perpendicular to the flexural bar axis.

9. A force sensor system according to any one of claims 1 to 8, characterized in that adjusting means (60) are provided for adjusting the position of one end of the tongue (40) relative to the flexural bar (12).

10. A force sensor system according to claim 9, characterized in that a screw (60) serves as the adjusting means, being screwed into a tongue retainer (42) which is mounted movably on the flexural bar (12) and bearing at one end on the flexural bar (12).

## Revendications

1. Système de détection de force pour enregistrer les forces appliquées sur une paire d'éléments de traction (18, 20) transversalement distants, notamment pour des fixations d'équipements de tracteurs agricoles, les éléments de traction (18, 20) agissant dans la région des deux extrémités d'une barre de flexion (12) s'étendant transversalement, qui s'appuie contre des éléments porteurs (14, 16) transversalement distants et dans la région médiane de laquelle sont disposés des moyens pour enregistrer le fléchissement de la barre de flexion (12), **caractérisé** en ce que les extrémités d'une patte (40) s'étendant transversalement sont fixés sur la barre de flexion (12), en ce que la patte (40) est nettement plus flexible que la barre de flexion (12) et se déforme conjointement avec la barre de flexion (12) lors d'un fléchissement de cette dernière, en s'approchant ou s'éloignant alors de la barre de flexion (12) par sa région médiane, et en ce qu'un capteur de déplacement (70) est disposé entre la barre de flexion (12) et une région médiane de la patte (40), afin de mesurer les modifications de la distance entre la barre de flexion (12) et la patte (40).

2. Système de détection de force selon la revendication 1, **caractérisé** en ce qu'une douille conique (22) est fixée dans un élément porteur (14), elle reçoit un premier tronçon partiel de la barre de flexion (12) et permet à la barre de flexion (12) de s'incliner dans la première douille conique (12) conformément à son fléchissement.

3. Système de détection de force selon la revendication 1 ou 2, **caractérisé** en ce qu'un goujon transversal (30) relie un second tronçon partiel de la barre de flexion (12) à l'autre élément porteur (16) et empêche que la barre de flexion (12) puisse être tirée hors des éléments porteurs (14, 16).

4. Système de détection de force selon la revendication 3, **caractérisé** en ce que l'axe du goujon transversal (30) s'étend sensiblement perpendiculairement au plan de flexion de la barre de flexion (12).

5. Système de détection de force selon l'une quelconque des revendications 1 à 4, **caractérisé** en ce que la patte (40) présente une courbure concave, vue depuis la direction de la barre de flexion (12), et se trouve plus proche de la barre de flexion (12) par ses extrémités que par sa région médiane.

6. Système de détection de force selon l'une quelconque des revendications 1 à 5, **caractérisé** en ce qu'au moins une extrémité de la patte (40) est fixée à un support de patte (42) fixé sur la barre de flexion (12).

7. Système de détection de force selon la revendication 6, **caractérisé** en ce que le support de patte (42) présente un corps (45) pourvu d'une fente (46) pour recevoir une extrémité de la patte (40).

8. Système de détection de force selon la revendication 6 ou 7, **caractérisé** en ce que le support de patte (42) présente deux branches (50) qui s'étendent de part et d'autre de la barre de flexion (12) et sont assemblées à la barre de flexion (12) de telle sorte que le support de patte (42) peut pivoter autour d'un axe perpendiculaire à l'axe de la barre de flexion.

9. Système de détection de force selon l'une quelconque des revendications 1 à 8, **caractérisé** en ce que des moyens de réglage (60) sont prévus pour régler la position d'une extrémité de la patte (40) par rapport à la barre de flexion (12).

10. Système de détection de force selon la revendication 9, **caractérisé** en ce qu'on utilise comme moyens de réglage une vis (60), qui peut être vissée dans un support de patte (42) fixé en mobilité à la barre de flexion (12) et qui s'appuie par une extrémité contre la barre de flexion (12).
